# EUROPÄISCHE PATENTSCHRIFT

(11) **EP 0 664 742 B1**
(45) Veröffentlichungstag und Bekanntmachung des Hinweises auf die Patenterteilung: **22.04.1998**
(21) Anmeldenummer: 94926126.7
(22) Anmeldetag: 28.07.1994
(51) Int. Cl.: B29C 49/66, B29C 49/48

(54) **VERFAHREN UND VORRICHTUNG ZUR HERSTELLUNG VON BLASFORMTEILEN AUS KUNSTSTOFF**
PROCESS AND DEVICE FOR PRODUCING BLOW-MOULDED PLASTIC PARTS
PROCEDE ET DISPOSITIF DE PRODUCTION DE PIECES PLASTIQUES MOULEES PAR SOUFFLAGE

(30) Priorität: 29.07.1993 DE 4325559
(43) Veröffentlichungstag der Anmeldung: 02.08.1995
(73) Patentinhaber: AIR PRODUCTS AND CHEMICALS, INC., Allentown, PA 18195-1501 (US)
(72) Erfinder: BABEL, Olaf, D-45527 Hattingen (DE); ERLER, Hans, D-45529 Hattingen (DE)
(74) Vertreter: Marx, Lothar, Dr.
(86) Internationale Anmeldenummer: EP9402499
(87) Internationale Veröffentlichungsnummer: WO9503932

(56) Entgegenhaltungen:
- EP-A- 0 039 930
- DE-A- 1 816 771
- DE-A- 2 223 580
- US-A- 5 229 043

## Beschreibung

Die Erfindung betrifft ein Verfahren zur Herstellung von Blasformteilen aus Kunststoff gemäß dem Oberbegriff des Patentanspruchs 1 sowie eine Vorrichtung zur Herstellung von Blasformteilen aus Kunststoff gemäß dem Oberbegriff des Patentanspruchs 10.

Beispielsweise in der Verpackungsindustrie werden zur Verpackung von Materialien unterschiedlichster Art, bspw. flüssiger Seife, aus Kunststoff hergestellte Blasformteile verwendet. Derartige Blasformteile werden mit unterschiedlichen Verfahren und Vorrichtungen hergestellt.

So wird das Kunststoffmaterial von Blasformteilen gemäß der DE 18 16 771 B2 in Form von heißen Vorformlingen aufgeblasen und anschließend lediglich durch die Kühlung der Blasform und damit durch Werkzeugkühlung zur Kristallisation gebracht. Bei der Herstellung äußerst dünnwandiger Blasformteile ist dieses Verfahren, das als Stauluftverfahren bekanntgeworden ist, auch heute noch sehr effektiv. Bei dickwandigen Formteilen hat dieses Verfahren den Nachteil langer Zykluszeiten. Außerdem besteht die Gefahr des Niederschlags von Raumluftfeuchtigkeit an der Innenkontur der Blasform, wenn die Blasform kälter ist als die Raumluft, so daß bei einem nachfolgenden Blasprozess das entstehende Blasformteil eine verminderte Oberflächenqualität aufweist (Apfelsinenhaut-Effekt).

Aus der DE 21 60 854 C3 ist ein Verfahren zum Kühlen eines nach dem Blasverfahren hergestellten Hohlkörpers aus thermoplastischem Kunststoff innerhalb einer Blasform bekannt, bei dem ein aus Luft und Wasser bestehendes Kühlmedium abgeschreckt und unter einem hohen Druck in ein in einer Blasform ausgeformtes Blasformteil eingespritzt wird. In dem Blasformteil tritt eine plötzliche adiabatische Expansion des Kühlmediums auf, wodurch sich feine Eiskristalle bilden, die sich an der Wand des Blasformteils niederschlagen und dieses kühlen. Bei der Verwendung von Wasser als Kühlmittel kommt es jedoch zu einer erhöhten Gefahr von Eiskristallbildung im Bereich des Blasdoms bzw. in der Blasform. Es liegt auf der Hand, daß die oben erwähnten Nachteile damit bei dem Verfahren bzw. bei der Vorrichtung nach dieser Druckschrift in erhöhtem Maße auftreten. Die Zykluszeiten und die Qualität der erzeugten Blasformteile sind auch hier nicht überzeugend.

Aus der DE 22 23 580 C3 ist ein Verfahren bekannt, bei dem zur Herstellung von Blasformteilen Stickstoff oder Argon verwendet wird.

Bei einem weiteren Verfahren laut der gattungsgemäßen DE 24 42 254 B2 wird einem Blasgas aus Stickstoff oder Argon zeitweise Druckluft zugegeben, und vor Erreichen des endgültigen Aufblasdrucks wird die zusätzlich zugeführte Druckluft unterbrochen. Gekühlt wird mit flüssigem Stickstoff.

Beide letztgenannte Verfahren schlagen eine externe Kühlung, also eine Kühlung der Blasform, vor.

Bei der Verfahrensweise bzw. der Vorrichtung gemäß der DE 26 36 262 B2 wird so vorgegangen, daß Kohlensäure über Zuleitungen in das Blasformteil eingeführt wird, um das Blasformteil aufzublasen. Über weitere Zuleitungen wird ein Kühlmittel in Hohlräume in der Blasform geführt, um das Kunststoffmaterial des aufgeblasenen Blasformteils zur Kristallisation und damit zur Abkühlung und Verfestigung zu bringen. Lange Zykluszeiten, die Gefahr des Niederschlags von Feuchtigkeit und die damit verbundenen, oben bereits angedeuteten Nachteile treten damit auch hier auf.

Aus der DE 28 17 472 C2 ist ein Verfahren bekannt, bei dem Blasformteile mittels einer Mischung aus kalter Luft und Wasser aufgeblasen bzw. von innen gekühlt werden, wobei sich die oben aufgeführten Probleme ebenfalls ergeben.

Die Vorrichtung gemäß der DE 33 37 651 C2 weist als Blasform zwei Blasformhälften mit verhältnismäßig geringer Masse auf, die von Heizformhälften mit größerer Masse umschließbar sind. Sobald ein in den Blasformhälften befindliches Blasformteil aus Kunststoff aufgeblasen ist, werden die Heizformhälften herangeführt und an die Blasformhälften von außen angelegt, um durch die große Masse der Heizformhälften die Blasformhälften und den darin befindlichen ausgeformten Vorformling abzukühlen und dessen Material zu kristallisieren. Der Apparateaufwand ist bei dieser Vorrichtung relativ hoch, wobei die Abkühltemperatur nicht hinreichend tief einstellbar ist.

Aus der DE 37 28 208 A1 ist noch ein Verfahren zum Herstellen von Blasformteilen aus Kunststoff bekannt, bei dem der Vorformling zunächst aufgeblasen und anschließend ein Kühlmittel in das Blasformteil eingespritzt wird, wobei als Kühlmittel Wasser vorgeschlagen wird. Das aus der DE 37 28 208 A1 hervorgehende Verfahren weist vergleichbare Nachteile auf wie der übrige Stand der Technik.

Der oben aufgeführte Stand der Technik und insbesondere die dabei erörterten Innenkühlverfahren ergeben keine reproduzierbaren Produkte. Außerdem sind die Verfahren aufgrund von Vereisungen technologisch anfällig, wirtschaftlich zweifelhaft und auch ansonsten mit weiteren Nachteilen behaftet.

Auch das derzeit besonders häufig verwendete klassische Stauluftverfahren mit der ausschließlichen Kühlung des Blasformteils durch das gekühlte Werkzeug bzw. die gekühlte Blasform hat in jedem Fall seine Grenzen hinsichtlich der Kühlmitteltemperatur, da es ansonsten zu nicht tolerierbaren Kondensationseffekten am kalten Werkzeug kommt.

Es ist die Aufgabe der vorliegenden Erfindung, ein Verfahren sowie eine Vorrichtung vorzuschlagen, die den Nachteilen des oben erörterten Stand der Technik zumindest weitgehend Abhilfe verschaffen; insbesondere sollen ein Verfahren und eine Vorrichtung vorgeschlagen werden, die kürzere Zykluszeiten und eine verbesserte und zuverlässig reproduzierbare Qualität der bei verkürzter Zykluszeit hergestellten Blasformteile ermöglichen.

Diese Aufgabe wird durch ein Verfahren mit den im Patentanspruch 1 aufgeführten Merkmalen sowie durch eine Vorrichtung mit den im Patentanspruch 10 aufgeführten Merkmalen gelöst.

Vorteilhafte Verfahrensvarianten bzw. Ausführungsformen gehen aus den Unteransprüchen hervor.

Durch die Verwendung von Flüssig-Stickstoff zum Innenkühlen der Formteile, durch die mehrfache Verwendung des verdampften Stickstoffes für das Aufblasen nachfolgender Blasformteile bzw. Vorformling und das Spülen des Blasdorns und/oder der Blasform mit warmen, trockenem Stickstoff, der sich aus dem zum Abkühlen verwendeten flüssigen, trockenen Stickstoffs ergibt, lassen sich sehr kurze Zykluszeiten erreichen, die gegenüber den Zykluszeiten bekannter Verfahren halbiert oder noch stärker verkürzt sind.

Verfahren aufgrund von Vereisungen technologisch anfällig, wirtschaftlich zweifelhaft und auch ansonsten mit weiteren Nachteilen behaftet.

Auch das derzeit besonders häufig verwendete klassische Stauluftverfahren mit der ausschließlichen Kühlung des Blasformteils durch das gekühlte Werkzeug bzw. die gekühlte Blasform hat in jedem Fall seine Grenzen hinsichtlich der Kühlmitteltemperatur, da es ansonsten zu nicht tolerierbaren Kondensationseffekten am kalten Werkzeug kommt.

Die EP-A-0 039 930 offenbart ein Verfahren zur Herstellung von Blasformteilen, wobei ein Artikel in einer Blasform aufgeblasen und anschließend abgekühlt wird. Ein verflüssigtes Gas wird in das Innere des teilweisen aufgeblasenen Artikels eingeführt, wo es verdampft, den Aufblasvorgang des Artikels vollendet und den Artikel abkühlt. Eine Mischung des Blasgases und des verdampften verflüssigten Gases wird wiedergewonnen und zur Verwendung als Blasgas in einem nachfolgenden Blasformschritt wiederaufbereitet.

Es ist die Aufgabe der vorliegenden Erfindung, ein Verfahren sowie eine Vorrichtung vorzuschlagen, die den Nachteilen des oben erörterten Stand der Technik zumindest weitgehend Abhilfe verschaffen; insbesondere sollen ein Verfahren und eine Vorrichtung vorgeschlagen werden, die kürzere Zykluszeiten und eine verbesserte und zuverlässig reproduzierbare Qualität der bei verkürzter Zykluszeit hergestellten Blasformteile ermöglichen.

Diese Aufgabe wird durch ein Verfahren mit den im Patentanspruch 1 aufgeführten Merkmalen sowie durch eine Vorrichtung mit den im Patentanspruch 10 aufgeführten Merkmalen gelöst.

Vorteilhafte Verfahrensvarianten bzw. Ausführungsformen gehen aus den Unteransprüchen hervor.

Durch die Verwendung von Flüssig-Stickstoff zum Innenkühlen der Formteile, durch die mehrfache Verwendung des verdampften Stickstoffes für das Aufblasen nachfolgender Blasformteile bzw. Vorformling und das Spülen des Blasdorns und/oder der Blasform mit warmen, trockenem Stickstoff, der sich aus dem zum Abkühlen verwendeten flüssigen, trockenen Stickstoffs ergibt, lassen sich sehr kurze Zykluszeiten erreichen, die gegenüber den Zykluszeiten bekannter Verfahren halbiert oder noch stärker verkürzt sind.

Mittels des erfindungsgemäßen Verfahrens kann gegenüber dem klassischen Stauluftverfahren mit der ausschließlichen Kühlung des Formteils durch das gekühlte Werkzeug bzw. die gekühlte Blasform die Kondensation der Raumluftfeuchte am kalten Werkzeug (Apfelsinenhauteffekt) sicher vermieden werden. Auch die dem bekannten klassischen Stauluftverfahren auferlegten Grenzen hinsichtlich der Kühlmitteltemperatur gelten nicht für das Verfahren gemäß der vorliegenden Erfindung.

Durch die Verwendung von gasförmigem trockenem und warmen Stickstoff, gewonnen aus dem ursprünglich trockenen flüssigen Stickstoff, beim Aufblasen der Vorformlinge wird auch die Vereisungsgefahr beim Aufblasen gegenüber dem Stand der Technik vermieden, womit ein sicherer Vereisungsschutz während des Aufblasens gewährleistet wird.

Um den bis zu - 160°C kalten Blasdom auch bei geöffnetem Blaswerkzeug (Einführen des Verformlings, Entnahme des Formteils) vor Vereisung zu schützen, wird der Blasdorn erfindungsgemäß mit dem trockenen warmen, gasförmigen Stickstoff umspült, was als Sperrgas gegen die Raumluft wirkt. Damit wird auch in dieser Phase des Blasprozuesses ein Eisansatz am Blasdorn sicher verhindert.

Vorteilhafterweise wird der trockene Flüssigstickstoff, der beim Innenkühlen im Blasformteil verdampft, druckgeregelt aus dem Blasformteil abgelassen, nacherwärmt, in einem Zwischenspeicher gelagert, und anschließend zum Aufblasen und/oder auch druckreduziert zum Durchspülen des Blasdorns und der Blasform verwendet und damit auch gasförmig sekundär genutzt. Diese Vorgehensweise steigert nicht nur die Effizienz bzw. senkt die Zykluszeit, sondern fördert zusätzlich noch die Wirtschaftlichkeit, da der verdampfte, ehemals flüssige, trockene Stickstoff mehrfach verwendet werden kann.

Einen großen Vorteil birgt auch die Möglichkeit, den beim Innenkühlen verdampften Flüssigstickstoff mittels eines Wärmetauschers, insbesondere eines Umluftwärmetauschers, nachzuerwärmen, um auf diese Weise einerseits Kühlleistung für andere Zwecke zur Verfügung zu stellen und andererseits den Druck zu steuern und dafür zu sorgen, daß ein Blasgas bzw. ein Spülgas mit optimierten Parametern zur Verfügung steht. Vorteilhafterweise kann als Wärmetauscher auch ein kühlwasserbetriebener Platten- oder Rohrbündel-Wärmetauscher verwendet werden.

Wird der flüssige Stickstoff, bevor er in die Formteile gelangt, um diese innenzukühlen, durch einen Phasentrenner geleitet, so kann in vorteilhafter Weise gewährleistet werden, daß ausschließlich flüssiger Stickstoff zur Innenkühlung in die Vorformlinge eintritt, so daß eine verbesserte Reproduzierbarkeit der Verfahrensparameter gewährleistet wird. Dabei kann der im Phasentrenner abgeschiedene, gasförmige Stickstoff ebenfalls sekundär zum Blasen oder Spülen verwendet werden, insbesondere wenn er, wie oben erwähnt, nacherwärmt worden ist. Die Lagerung kann in einem Zwischenspeicher oder in dem Zwischenspeicher für den verdampften, ehemals flüssigen, trockenen Stickstoff erfolgen.

Wird die Druckdifferenz zwischen der Innenkühlung und dem Aufblasen auf ca. 0,5 bis 10 bar eingestellt, so kann der Formteilschrumpfung beim Kühlen bzw. Erstarren des Formteil-Materials wirksam entgegengewirkt und die Effizienz der Kühlung des Formteils durch die Kühlung des Werkzeugs bzw. der Blasform erhöht werden. Durch einen hohen Innendruck wird die Formteil-Kühlung vom Werkzeug her unterstützt. Verbesserte Effizienz der Formteil-Kühlung vom Werkzeug her gepaart mit einer erfindungsgemäß kalorisch leistungsfähigen Innenkühlung führen zu gleichmäßig ausgekühlten Formteilen bei wesentlich kürzerer Zykluszeit, vereint qualitative und quantitative Vorteile.

Wie bereits angedeutet, wird durch das Durch- und/oder Umspülen des oder der Blasdorne und/oder Nadeln sowie ggfs. des Durchspülens der geöffneten Blasform mit trockenem, warmen, gasförmigem Stickstoff das Kondensieren von Wasserfeuchte aus der Raumluft an den betreffenden Teilen und insbesondere auch an der kalten Innenkontur der geöffneten Blasform verhindert, womit sich die Oberflächenqualität der erzeugten Blasformteile und die Zykluszeit zumindest durchschhittlich verbessern lassen. Ferner ist es durch die damit bewirkte Kondensationssperre möglich, tiefere Kühltemperaturen bei der Werkzeugkühlung zu ermöglichen.

Außerdem kann durch das Innenkühlen der aufgeblasenen Vorformlinge mit flüssigem, trockenem Stickstoff in den meisten Anwendungsfällen auf eine Wasserkühlung des Blasdorns, wie beim Stauluftverfahren üblich, verzichtet werden.

Durch eine vorteilhafte Einstellung der Betriebsparameter, wie etwa dem Stickstoffdruck, der Spülzeit und damit des Gasdurchsatzes, der Kälteleistung usw., kann das erfindungsgemäße Verfahren, bzw. die erfindungsgemäße Vorrichtung zumindest über einen weiten Bereich an die Parameter des Aufschmelzextruders der Extrusionsblasmaschine angepaßt werden.

Die erfindungsgemäße Vorrichtung bringt durch den Einsatz eines Zwischenspeichers für den verdampften, ehemals flüssigen, trockenen Stickstoff, zu dessen weiteren Verwendung als Blas- und/oder Spülgas die oben bereits erörterten Vorteile zumindest teilweise mit sich.

Nachfolgend wird die Erfindung anhand der nachfolgenden Beschreibung unter Bezugnahme auf die anliegenden Figuren näher erläutert. Dabei ergeben sich weitere Vorteile bzw. Merkmale gemäß der vorliegenden Erfindung. Es zeigen:
- Figur 1: eine Vorrichtung gemäß der vorliegenden Erfindung in einer Prinzipskizze, wobei diese Vorrichtung zur Ausführung des Verfahrens gemäß der vorliegenden Erfindung geeignet ist; und
- Figur 2: das Detail X von Figur 1, das einen Blasdorn und einen oberen Abschnitt einer Blasform in einer Schnittdarstellung wiedergibt.

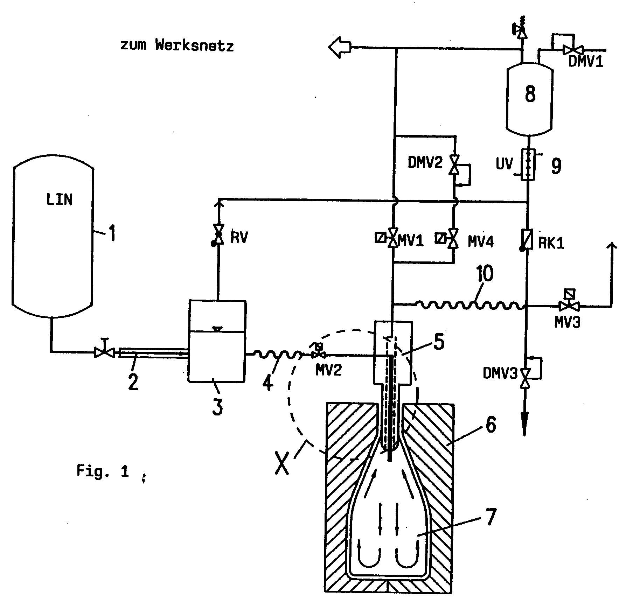

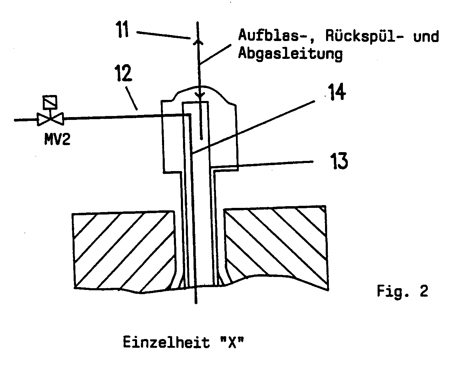

In Figur 1 ist eine erfindungsgemäß ausgestaltete Vorrichtung mit einem Tank 1 für flüssigen Stickstoff (LIN: **LI**quid **N**itrogen) dargestellt, der über eine Leitung, vorzugsweise eine vakuumisolierte Rohrleitung 2, mit einem Phasentrenner 3 verbunden ist. In dem Phasentrenner 3 wird der flüssige, trockene Stickstoff von etwaigen gasförmigen Anteilen getrennt. Die gasförmigen Anteile können über das Ventil RV aus dem Phasentrenner 3 ausgegeben werden. Der Phasentrenner 3 befindet sich vorteilhafterweise an der Blasvorrichtung 5, 6, 7, vorzugsweise am höchsten Punkt der Rohrleitung in Richtung auf den Blasdorn 5 (11, 12, 13, 14 in Fig. 2).

Der flüssige Stickstoff von dem Phasentrenner 3 wird über eine vorzugsweise möglichst kurze und gut isolierte Rohrleitung 4 und ein steuerbares Dosierventil MV2 in den Blasdorn 5 und dann in den bereits etwas oder völlig aufgeblasenen Vorformling eingeleitet, um diesen von innen zu kühlen und die Kristallisation des Kunststoffmaterials zu bewirken, aus dem das Formteil 7 besteht. Der Vorformling selbst wird in heißem Zustand in die Blasform 6 eingebracht, nachdem der Vorformling aus einem Aufschmelzextruder extrudiert und auf den Blasdorn 5 aufgesetzt worden ist. Die Blasform 6 besteht aus mindestens zwei Teilen bzw. Hälften, die zu einer geschlossenen Form zusammengeführt werden, sobald der heiße Vorformling auf dem Blasdorn innerhalb des Raumes angeordnet ist, der durch die Bestandteile der Blasform 6 umgeben wird.

Der trockene warme Stickstoff zum Aufblasen des Vorformlings gelangt über den Blasdorn 5 bzw. die Zuleitung 11 (siehe Figur 2) im Außenrohr 13 in den Vorformling, um diesen aufzublasen, bis dieser an den Innenwandungen der Blasform 6 anliegt. Die Steuerung des Blasdruckes erfolgt über Ventileinrichtungen MV1 bzw. DMV3, wobei in der Leitung bzw. im Blasdorn 5 selber eine Meßstelle vorgesehen sein kann, um den Blasdruck exakt zu messen bzw. zu steuern.

Der Blasdorn 5 ist über eine (gewellt dargestellte) Leitung mit einem Zwischenspeicher 8 verbunden, in welchen der beim Innenkühlen eines aufgeblasenen Vorformlings 7 verdampfte, ehemals trockene, flüssige Stickstoff eingeleitet und zwischengespeichert wird. Vor dem Zwischenspeicher 8 ist ein Wärmetauscher 9 vorgesehen, der den ggfs. noch kühlen, gasförmigen Stickstoff auf eine erwünschte Temperatur für das Blas- bzw. Spülgas für den Blasvorgang bzw. den Spülvorgang einstellt, während die Blasform 6 geöffnet ist.

Der Zwischenspeicher 8 ist sowohl an das Werksnetz als auch an den Blasdorn 5 (bzw. 11, 12, 13, 14) angeschlossen. Wird für den Spülvorgang bzw. den Blasvorgang nicht so viel trockener, warmer Stickstoff benötigt, wie zuvor beim Kühlen der Formteile 7 flüssiger, trockener Stickstoff verdampft, so kann Stickstoff aus dem Zwischenspeicher 8 in das Werksnetz zur weiteren Verwendung eingespeist werden. Ansonsten wird der Stickstoff aus dem Zwischenspeicher 8 in den Blasdorn geleitet, um entweder für einen Blasvorgang oder für das Spülen verwendet zu werden. Vom Werksnetz her kann auch gasförmiger, trockener Stickstoff zugesetzt werden.

Der beim Innenkühlen des aufgeblasenen Vorformlings verdampfte und erwärmte, ehemals trockene, flüssige Stickstoff gelangt über einen Wärmetauscher bzw. Umluftverdampfer 9 in den Zwischenspeicher 8. Aus dem Zwischenspeicher 8 wird das vorzugsweise einen Druck von 8 bar aufweisende Blasgas entnommen, um den Vorformling in der geschlossenen Blasform 6 soweit aufzublasen, daß dieser an den Innenwandungen der Blasform 6 anliegt.

Während die Blasform 6 geöffnet ist, wird der Blasdorn über eine zusätzliche Druckteduzierung DMV2 und MV4 mit gasförmigem Stickstoff von ca. 100 mm WS Überdruck durchströmt, wobei gleichzeitig die geöffnete Blasform 6 durchblasen werden kann. Auf diese Weise wird die Kondensation von Raumluft verhindert.

Bei der Herstellung eines Formteils 7 wird trockener, warmer Stickstoff aus dem Zwischenspeicher 8, der durch die Innenkühlung der zuvor hergestellter Blasformteile 7 angefallen ist, über das Ventil MV1 und den Blasdorn 5 in einen heißen Vorformling, der sich in der geschlossenen Blasform 6 befindet, eingeleitet. Damit wird der Vorformling solange druckkontrolliert aufgeblasen, bis ein Enddruck erreicht ist, bzw. bis die Wandungen des aufgeblasenen Vorformlings an den Innenwandungen der Blasform 6 anliegen.

Anschließend wird flüssiger Stickstoff über das Ventil MV2 und den Blasdorn 5 in den aufgeblasenen Vorformling eingeleitet, so daß dieser abgekühlt wird und das Wandungsmaterial des aufgeblasenen Vorformlings kristallisiert bzw. aushärtet. Der dabei verdampfende, ehemals flüssige, trockene Stickstoff gelangt über den Wärmetauscher 9 in den Zwischenspeicher 8 und wird dort für nachfolgende Blasbzw. Spülschritte gelagert.

Nachdem die Wandungen des nunmehr fertigen Blasformteils 7 verfestigt sind, wird die Blasform 6 geöffnet und das Blasformteil 7 von dem Blasdorn 5 entfernt. Während die Blasform 6 geöffnet ist, wird über den Blasdorn 5 trockener, warmer Stickstoff aus dem Zwischenspeicher 8 ausgeblasen. Dieser ist ebenfalls auf die Innenwandungen der Blasform 6 gerichtet und verhindert ein Vereisen bzw. Niederschlagen der Raumfeuchtigkeit an dem Blasdorn 5 und den Innenflächen der geöffneten Blasform 6.

In Figur 2 ist der Blasdorn 5 gemäß Figur 1 dargestellt. Dieser weist eine Zuleitung 12 bzw. das Innenrohr 14 für den flüssigen Stickstoff auf, wobei der Zustrom des flüssigen, trockenen Stickstoffs über das Ventil MV2 gesteuert wird. Trockener, gasförmiger, warmer Stickstoff zum Aufblasen und zum Spülen kann über die Leitung 11 und 13 zugeleitet werden. Der beim Innenkühlen entstehende gasförmige Stickstoff, der aus dem ehemaligen trockenen, flüssigen Stickstoff aus der Leitung 12 und 14 resultiert, kann über die Leitung 10 und 11 und 13 aus dem Blasformteil 7 abgezogen und in den Zwischenspeicher 8 (siehe Figur 1) geleitet werden.

Vor Öffnung der Blasform zwecks Entnahme des Formteils wird das Formteil 7 durch Öffnen des Ventils MV3 druckentlastet.

## Patentansprüche

1. Verfahren zur Herstellung von Blasformteilen aus Kunststoff mit den folgenden Merkmalen:
a) als Blasmedium wird Stickstoff in einen in einer Blasform befindlichen Vorformling geleitet;
b) der im heißen Zustand verformbare Vorformling wird über einen Blasdorn aufgeblasen;
c) der aufgeblasene Vorformling wird mit flüssigem Stickstoff von Innen gekühlt; und
d) der als Blasmedium eingeleitete Stickstoff besteht im wesentlichen, vorzugsweise ausschließlich, aus einem trockenen und warmen Stickstoff, der zuvor beim Innenkühlen eines aufgeblasenen Vorformlings (7) verdampft wurde;
**gekennzeichnet durch** die folgenden Merkmale:
e) der Blasdorn (5; 11, 12, 13, 14) und/oder die Blasform (6) werden während die Blasform (6) geöffnet ist, mit dem warmen und trockenen Stickstoff durch- bzw. umspült; und
f) der Eingangsdruck wird bei dem Innenkühlen eines aufgeblasenen Vorformlings (7) höher eingestellt als bei dem Aufblasen eines heißen Vorformlings.

2. Verfahren nach Anspruch 1, dadurch gekennzeichnet, daß der trockene Flüssigstickstoff, der beim Innenkühlen im Formteil (7) verdampft, druckgeregelt aus dem Formteil (7) abgelassen wird.

3. Verfahren nach einem der Ansprüche 1 oder 2, dadurch gekennzeichnet, daß der Stickstoff zum Aufblasen des Vorformlings nacherwärmt, in einem Zwischenbehälter (8) gelagert und anschließend zum Aufblasen oder druckreduziert zum Durch- bzw. Umspülen des Blasdorns (X; 11, 12, 13, 14) und/oder der Blasform (6) verwendet wird.

4. Verfahren nach Anspruch 3, dadurch gekennzeichnet, daß der bei der Innenkühlung verdampfte Flüssigstickstoff mittels eines Wärmetauschers, insbesondere eines Umluftwärmetauschers, nacherwärmt wird.

5. Verfahren nach einem der Ansprüche 1 bis 3, dadurch gekennzeichnet, daß der bei der Innenkühlung verdampfte Flüssigstickstoff mittels eines kühlwasserbetriebenen Platten- oder Rohrbündel-Wärmetauschers nacherwärmt wird.

6. Verfahren nach einem der Ansprüche 1 bis 5, dadurch gekennzeichnet, daß in einem Phasentrenner (3) gasförmiger Stickstoff von dem Flüssigstickstoff getrennt wird, der zum Innenkühlen des Formteils (7) verwendet wird.

7. Verfahren nach Anspruch 6, dadurch gekennzeichnet, daß der am Phasentrenner (3) abgeschiedene, gasförmige Stickstoff nacherwärmt und zwischengelagert (8) wird.

8. Verfahren nach einem der Ansprüche 1 bis 7, dadurch gekennzeichnet, daß die Druckdifferenz zwischen den Eingangsdrücken bei der Innenkühlung des Formteils (7) und beim Aufblasen des Vorformlings ca. 0,5 bis 10 bar beträgt.

9. Verfahren nach einem der Ansprüche 1 bis 8, dadurch gekennzeichnet, daß die Verfahrensparameter, wie z.B. Stickstoffdruck, Spülzeit, Gasdurchsatz bzw. Kälteleistung, etc. an einen vorgeordneten Aufschmelzextruder für den Kunststoff eines jeweiligen Formteils (7) angepaßt werden.

10. Vorrichtung zur Herstellung von Blasformteilen aus Kunststoff mit den folgenden Merkmalen:
a) einem Speicher für ein Kühlmittel bzw. eine Einrichtung zur Erzeugung eines Kühlmittels;
b) einer Blasform;
c) einem Blasdorn mit einem Anschluß an den Speicher bzw. die Kühlmittelerzeugungseinrichtung;
d) einer Leitung, um das verdampfte Kühlmittel aus einem aufgeblasenen, in der Blasform befindlichen Vorformling zu entnehmen;
e) einer Leitung, die an den Blasdorn angeschlossen ist, um einen heißen Vorformling mittels eines Blasgases aufzublasen;
f) an die Leitung zum Entnehmen des verdampften Gases (10) ist ein Zwischenspeicher (8) angeschlossen, um das beim Innenkühlen verdampfte Gas zwischenzuspeichern; und
g) der Zwischenspeicher (8) ist an die Leitung (11) zum Zuführen des Gases bzw. Blasgases angeschlossen.
**gekennzeichnet durch** die folgenden Merkmale:
h) vor und/oder hinter dem Zwischenspeicher (8) ist ein Wärmetauscher (9), insbesondere ein Umluftverdampfer oder ein kühlwasserbetriebener Platten- oder Rohrbündel-Wärmetauscher angeordnet, um den verdampften Stickstoff nachzuerwärmen; und
i) zwischen dem Speicher (1) für das Kühlmittel bzw. die Kühlmittelerzeugungseinrichtung und den Blasdorn (5) ist ein Phasentrenner (3) angeordnet.

11. Vorrichtung nach Anspruch 10, dadurch gekennzeichnet, daß der Phasentrenner (3) über eine Zuleitung mit dem Zwischenspeicher (8) bzw. dem Wärmetauscher (9) verbunden ist.

12. Vorrichtung nach einem der Ansprüche 10 oder 11, dadurch gekennzeichnet, daß Steuereinrichtungen bzw. Ventile vorgesehen sind, um den Eingangsdruck des Kühlmedium höher einzustellen als den Druck des Blasmittels.

## Claims

1. A process for producing blow-moulded plastic parts, having the following features:
a) as the blow medium, nitrogen is introduced into a preform or parison located in a blow mould;
b) the preform mouldable in its hot state is blown-up via a blow mandrel;
c) the blown-up preform is cooled from within by liquid nitrogen; and
d) the nitrogen introduced as the blow medium consists substantially, preferably exclusively, of a dry and warm nitrogen which was evaporated beforehand during the internal cooling of a blown-up preform (7);
characterized by the following features:
e) the blow mandrel (5; 11, 12, 13, 14) and/or the blow mould (6) are flushed through and/or around by the warm and dry nitrogen whilst the blow mould (6) is open; and
f) during internal cooling of a blown-up preform (7) the inlet pressure is set higher than during blowing up of a hot preform.

2. A process according to claim 1, characterized in that the dry liquid nitrogen which evaporates during internal cooling in said moulded part (7) is discharged pressure-regulated from said moulded part (7).

3. A process according to one of the claims 1 or 2, characterized in that for blowing up the preform the nitrogen is reheated, held in an intermediate container (8) and subsequently used for blowing up or, pressure-reduced, for flushing through and/or around said blow mandrel (X; 11, 12,13,14) and/or said blow mould (6).

4. A process according to claim 3, characterized in that the liquid nitrogen which is evaporated during the internal cooling is reheated by means of a heat exchanger, particularly by means of a recirculation air heat exchanger.

5. A process according to one of the claims 1 to 3 characterized in that the liquid nitrogen which is evaporated during the internal cooling is reheated by means of a cooling-water-operated plate-type or shell-and-tube-type heat exchanger.

6. A process according to one of the claims 1 to 5, characterized in that in a phase separator (3) gaseous nitrogen is separated from the liquid nitrogen which is used for the internal cooling of said moulded part (7).

7. A process according to claim 6, characterized in that the gaseous nitrogen separated out by said phase separator (3) is reheated and intermediately stored (8).

8. A process according to one of the claims 1 to 7, characterized in that the pressure difference between the inlet pressures for the internal cooling of the moulded part (7) and for blowing up the preform amounts to approx. 0.5 to 10 bar.

9. A process according to one of the claims 1 to 8, characterized in that the process parameters such as e.g. nitrogen pressure, flushing time, gas throughput or cooling capacity, etc., are adapted to an upstream-located melt extruder for the plastics material of a respective moulded part (7).

10. A device for producing blow-moulded plastic parts having the following features:
a) a storage means for a coolant and/or a means for generating a coolant;
b) a blow mould;
c) a blow mandrel having a connection to said storage means and/or said means for generating a coolant;
d) a conduit for removing the evaporated coolant from a blown-up preform located in said blow mould; and
e) a conduit which is connected to said blow mandrel for blowing up a hot preform by means of a blowing gas;
f) to said conduit for removing the evaporated gas (10) an intermediate storage means (8) is connected for the intermediate storage of the gas evaporated during the internal cooling; and
g) the intermediate storage means (8) is connected to said conduit (11) for supplying said gas and/or said blowing gas.
characterized by the following features:
h) upstream and/or downstream of a said intermediate storage means (8) a heat exchanger (9), particularly a recirculation air evaporator or a cooling-water-operated plate-type or shell-and-tube type heat exchanger, is disposed for reheating the evaporated nitrogen; and
i) between said storage means (1) for the coolant and/or said means for generating the coolant and said blow mandrel (5) a phase separator (3) is disposed.

11. A device according to claim 10, characterized in that said phase separator (3) is connected to said intermediate storage means (8) and/or said heat exchanger (9) by a conduit.

12. A device according to one of the claims 10 or 11, characterized in that control means and/or valves are provided for setting the inlet pressure of the coolant higher than the pressure of the blow medium.

## Revendications

1. Procédé de fabrication de pièces soufflées en matière plastique présentant les caractéristiques suivantes :
a) de l'azote est admis en tant que fluide de soufflage dans une préforme placée dans un moule de soufflage ;
b) la préforme moulable chaude est gonflée au travers d'un poinçon de soufflage ;
c) la préforme soufflée est refroidie de l'intérieur avec de l'azote liquide, et
d) l'azote introduit en tant que fluide de soufflage est constitué essentiellement, de préférence exclusivement, par de l'azote sec et chaud qui a été préalablement vaporisé lors du refroidissement interne d'une préforme soufflée (7) ;
caractérisé par les particularités suivantes :
e) le poinçon de soufflage (5;11,12,13,14) et/ou le moule de soufflage (6) sont parcourus, respectivement balayés pendant l'ouverture du moule de soufflage (6) par de l'azote chaud et sec, et
f) la pression d'admission lors du refroidissement interne d'une préforme soufflée (7) est réglée à un niveau plus élevé que pour le soufflage d'une préforme chaude.

2. Procédé selon la revendication 2, caractérisé en ce que l'azote liquide sec qui se vaporise au cours du refroidissement interne dans la pièce soufflée (7) est évacué de la pièce soufflée (7) avec régulation de la pression.

3. Procédé selon l'une des revendications 1 ou 2, caractérisé en ce que l'azote destiné au soufflage de la préforme est réchauffé, stocké dans un récipient intermédiaire (8) et ensuite utilisé pour le soufflage ou, après détente, pour le rinçage à fond, respectivement le balayage du poinçon de soufflage (X; 11,12,13,14) et/ou du moule de soufflage (6).

4. Procédé selon la revendication 3, caractérisé en ce que l'azote liquide vaporisé lors du refroidissement interne est réchauffé au moyen d'un échangeur de chaleur, en particulier d'un échangeur de chaleur à circulation d'air.

5. Procédé selon l'une des revendications 1 à 3, caractérisé en ce que l'azote liquide vaporisé au cours du refroidissement interne est réchauffé au moyen d'un échangeur de chaleur à plaques ou à faisceau tubulaire refroidi à l'eau.

6. Procédé selon l'une des revendications 1 à 5, caractérisé en ce que de l'azote gazeux est séparé, dans un séparateur de phases (3), de l'azote liquide qui sert au refroidissement interne de la pièce moulée (7).

7. Procédé selon la revendication 6, caractérisé en ce que l'azote gazeux séparé dans le séparateur de phases (3) est réchauffé et stocké temporairement (8).

8. Procédé selon l'une des revendications 1 à 7, caractérisé en ce que la différence de pression entre les pressions d'admission lors du refroidissement interne de la pièce moulée (7) et lors du soufflage de la préforme se situe entre environ 0,5 et 10 bars.

9. Procédé selon l'une des revendications 1 à 8, caractérisé en ce que les paramètres opératoires, tels que par ex. la pression d'azote, la durée de balayage, le débit de gaz, respectivt. la capacité frigorifique, etc. sont adaptés à une extrudeuse de fusion placée en amont pour la matière plastique d'une pièce moulée correspondante (7).

10. Dispositif pour la fabrication de pièces soufflées en matière plastique présentant les caractéristiques suivantes :
a) un accumulateur pour un agent réfrigérant, respectivt. une installation pour la production d'un agent réfrigérant ;
b) un moule de soufflage ;
c) un poinçon de soufflage raccordé à l'accumulateur ou à l'installation de production de l'agent réfrigérant ;
d) une canalisation pour le soutirage de l'agent réfrigérant vaporisé à partir d'une préforme soufflée se trouvant dans le moule de soufflage ;
e) une canalisation raccordée au poinçon de soufflage pour le soufflage d'une préforme chaude à l'aide d'un gaz de soufflage ;
f) un accumulateur intermédiaire (8) est raccordé à la canalisation pour le soutirage du gaz vaporisé (10) en vue du stockage du gaz vaporisé lors du refroidissement interne, et
g) l'accumulateur intermédiaire (8) est raccordé à la canalisation (11) pour l'admission du gaz, respectivt. du gaz de soufflage,
caractérisé par les particularités suivantes :
h) un échangeur de chaleur (9), notamment un vaporiseur à circulation d'air ou un échangeur de chaleur à plaques ou à faisceau tubulaire refroidi à l'eau est placé avant et/ou après l'accumulateur intermédiaire (8) pour réchauffer l'azote vaporisé, et
i) un séparateur de phases (3) est intercalé entre l'accumulateur (1) pour l'agent réfrigérant, respectivt. l'installation de production de l'agent réfrigérant et le poinçon de soufflage (5).

11. Dispositif selon la revendication 10, caractérisé en ce que le séparateur de phases (3) est relié à l'accumulateur intermédiaire (8), respectivt. à l'échangeur de chaleur (9) par l'intermédiaire d'une canalisation d'alimentation.

12. Dispositif selon l'une des revendications 10 ou 11, caractérisé en ce qu'il est prévu des équipements de commande, respectivt. des soupapes pour régler la pression d'entrée du fluide réfrigérant à un niveau supérieur à la pression de l'agent de soufflage.
